# EUROPÄISCHE PATENTANMELDUNG

(11) **EP 3 883 083 A1**
(43) Veröffentlichungstag der Anmeldung: **22.09.2021**
(21) Anmeldenummer: 21162494.5
(22) Anmeldetag: 15.03.2021
(51) Int. Cl.: H02J 3/14, F24D 19/10

(54) **WÄRMEERZEUGERVORRICHTUNG, WÄRMEERZEUGERSYSTEM UND VERFAHREN ZUM BETRIEB DER WÄRMEERZEUGERVORRICHTUNG**

(30) Priorität: 18.03.2020 DE 102020203454
(71) Anmelder: Robert Bosch GmbH, 70442 Stuttgart (DE)
(72) Erfinder: De Bruin, Robbert, 7451XX Holten (NL)

(57) **Zusammenfassung**

Die Erfindung geht aus von einer Wärmeerzeugervorrichtung (10a, 60a; 10b; 10c) mit zumindest einer Heizeinheit (12a, 62a; 12b; 58c), insbesondere Wärmepumpeneinheit, mit zumindest einer Recheneinheit (16a, 66a; 16b; 86c) und mit zumindest einer weiteren Heizeinheit (14a, 64a; 14b) und/oder zumindest einer Energiespeichereinheit (48c).

Es wird vorgeschlagen, dass die Recheneinheit (16a, 66a; 16b; 86c) dazu eingerichtet ist, zumindest eine CO2-Information und/oder zumindest eine Primärenergieinformation von zumindest einem Energieversorger zu beziehen und/oder zu verarbeiten zu einem Reduzieren eines CO2-Ausstoßes und/oder zu einem Verbessern eines Umweltparameters.

## Beschreibung

### Stand der Technik

Es ist bereits eine Wärmeerzeugervorrichtung mit zumindest einer Heizeinheit, insbesondere Wärmepumpeneinheit, mit zumindest einer Recheneinheit und mit zumindest einer weiteren Heizeinheit und/oder zumindest einer Energiespeichereinheit, vorgeschlagen worden.

### Offenbarung der Erfindung

Die Erfindung geht aus von einer Wärmeerzeugervorrichtung mit zumindest einer Heizeinheit, insbesondere Wärmepumpeneinheit, mit zumindest einer Recheneinheit und mit zumindest einer weiteren Heizeinheit und/oder zumindest einer Energiespeichereinheit.

Es wird vorgeschlagen, dass die Recheneinheit dazu eingerichtet ist, zumindest eine CO2-Information und/oder zumindest eine Primärenergieinformation von zumindest einem Energieversorger zu beziehen und/oder zu verarbeiten zu einem Reduzieren eines CO2-Ausstoßes und/oder zu einem Verbessern eines Umweltparameters.

Vorzugsweise umfasst die Wärmeerzeugervorrichtung zumindest zwei Heizeinheiten. Insbesondere kann die Wärmeerzeugervorrichtung eine Vielzahl an Heizeinheiten umfassen, wie beispielsweise drei, vier, fünf, sechs, zehn, zwanzig oder dergleichen. Die zumindest eine Heizeinheit und/oder die zumindest eine weitere Heizeinheit sind/ist dazu vorgesehen, in einem Betriebszustand zumindest einen Energieträger, wie beispielsweise Kohle, Gas, Öl, Holz, Torf oder eine Energieform, wie beispielsweise elektrischen Strom, und/oder sonstige einem Fachmann bekannte Energieträger, zu einem Erzeugen von Wärmeenergie zu verarbeiten. Vorzugsweise ist die zumindest eine Heizeinheit als eine Wärmepumpeneinheit ausgebildet, welche insbesondere elektrischen Strom zu einem Erzeugen von Wärme verarbeitet. Die zumindest eine Heizeinheit kann als eine Gas-, Holz-, Kohle-, Strom- und/oder Ölheizeinheit ausgebildet sein.

Vorzugsweise ist die zumindest eine weitere Heizeinheit als eine Gas-, Holz-, Kohle-, Strom- und/oder Ölheizeinheit ausgebildet, welche insbesondere Gas, Holz, Kohle und/oder Öl zu einem Erzeugen von Wärme verarbeitet. Die weitere Heizeinheit kann als weitere Wärmepumpeneinheit ausgebildet sein. Die weitere Heizeinheit, insbesondere Wärmepumpeneinheit, kann sich insbesondere aufgrund ihrer Anordnung, eines verarbeiteten Energieträgers, eines Herstellungszeitpunkts, eines Designs, einer Größe, eines Wärmeenergieübertrags auf einen zu beheizenden Bereich, beispielsweise eines Hauses, oder aufgrund eines weiteren, einem Fachmann als sinnvoll erscheinenden Grund, im Wirkungsgrad, insbesondere im CO2-Ausstoß, insbesondere zumindest in einem Betriebszustand, von der zumindest einen Heizeinheit unterscheiden.

Optional kann die Wärmeerzeugervorrichtung zumindest eine Heizeinheit und zumindest eine Energiespeichereinheit aufweisen. Vorzugsweise ist die Energiespeichereinheit als eine Akkueinheit ausgebildet, insbesondere zu einem Speichern einer elektrischen Energie, welche insbesondere zu einem Versorgen einer der Heizeinheiten vorgesehen ist. Die Energiespeichereinheit kann mehrere Energiespeicherelemente, insbesondere Akkuelemente, aufweisen.

Unter einer "CO2-Information" soll vorzugsweise eine Information verstanden werden, welche zumindest eine, bevorzugt eine Vielzahl an, CO2-Kenngrößen und/oder CO2-Parameter, wie beispielsweise eine CO2-Kenngröße zu definierten Energieträgern wie Kohle, Gas, Öl, Strom oder dgl., beinhaltet, welche es insbesondere ermöglichen zu berechnen, wieviel CO2, insbesondere in einer Gewichts- und/oder Volumeneinheit, bei der Produktion einer Energiemenge, insbesondere durch eine der Heizeinheiten, entsteht/entstanden ist. Insbesondere gibt die CO2-Information an, und/oder ermöglicht es zu berechnen, wieviel CO2 bei einem Umwandeln, einem Transport und/oder einer Förderung, wie beispielsweise einem Abbau, einer Erschließung und/oder einer Förderlogistik, eines Energieträgers in eine Energiemenge, insbesondere durch zumindest eine der Heizeinheiten, entsteht/entstanden ist. Insbesondere kann die Recheneinheit die CO2-Information zu einem Ermitteln eines CO2-Ausstoßes zumindest eines, bevorzugt beider, der zumindest zwei Heizeinheiten, besonders bevorzugt für jede Heizeinheit individuell, insbesondere in Abhängigkeit des jeweiligen Energieträgers, welcher insbesondere von der jeweiligen Heizeinheit in eine Wärmeenergie umgewandelt wird, verarbeiten. Eine Information kann insbesondere eine Vielzahl an Teilinformationen, wie beispielsweise Parameter, Faktoren, wie Multiplikatoren, Gleichungen, Preis, Prozentangaben o. dgl., enthalten. Vorzugsweise umfasst die CO2-Information zumindest eine CO2-Kenngröße für jede Heizeinheit der Wärmeerzeugervorrichtung.

Die Recheneinheit ist vorzugsweise dazu eingerichtet, die CO2-Information zu beziehen. Die Recheneinheit ist vorzugsweise dazu eingerichtet, die CO2-Information zu verarbeiten. Die Recheneinheit ist vorzugsweise dazu eingerichtet, die CO2-Information zu beziehen und zu verarbeiten zu einem Reduzieren des CO2-Ausstoßes der Wärmeerzeugervorrichtung in einem Betriebszustand der Wärmeerzeugervorrichtung, in welchem die Wärmeerzeugervorrichtung insbesondere einen, bevorzugt einstellbaren, Bedarf an Wärmeenergie deckt. Unter "eingerichtet" oder "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Betriebszustand" der Wärmeerzeugervorrichtung soll insbesondere ein Zustand der Wärmeerzeugervorrichtung verstanden werden, in welchem zumindest eine der zumindest zwei Heizeinheiten der Wärmeerzeugervorrichtung eine von Null verschiedene Wärmeenergie erzeugt.

Beispielsweise ist die zumindest eine Heizeinheit als eine Wärmepumpeneinheit ausgebildet. Beispielsweise ist die Recheneinheit dazu eingerichtet, eine CO2-Information für die als Wärmepumpeneinheit ausgebildete Heizeinheit zu beziehen von zumindest einem Energieversorger, welcher einen elektrischen Strom für den Betrieb der Heizeinheit liefert. Beispielsweise ist die Recheneinheit dazu eingerichtet, die CO2-Information für die Heizeinheit zu verarbeiten. Beispielsweise kann die CO2-Information für die Heizeinheit eine CO2-Kenngröße beinhalten, welche angibt, wieviel CO2, insbesondere in einer Gewichts- und/oder Volumeneinheit, entstanden ist, um eine, insbesondere genormte, Strommenge, insbesondere in Kilowattstunden oder dgl., zu produzieren. Insbesondere kann die CO2-Information für die Heizeinheit beinhalten, aus welchen Energieträgern die, insbesondere genormte, Strommenge produziert wurde. Insbesondere kann die CO2-Information für die Heizeinheit beinhalten, wieviel CO2 bei einer Produktion der, insbesondere genormten, Strommenge entstanden ist. Insbesondere kann die CO2-Kenngröße beinhalten, wieviel CO2 entstanden ist, um die Energieträger in die, insbesondere genormte, Strommenge umzuwandeln, wieviel CO2 bei einem Transport der Energieträger vor einer Umwandlung in die, insbesondere genormte, Strommenge entstanden ist und/oder wieviel CO2 bei einem Abbau der Energieträger vor einer Umwandlung in die, insbesondere genormte, Strommenge entstanden ist und/oder eine Prognose, wieviel CO2 bei einem Lagern, insbesondere Endlagern, der Energieträger nach der Umwandlung in die, insbesondere genormte, Strommenge entstehen wird.

Beispielsweise ist die weitere Heizeinheit als eine Gasheizeinheit ausgebildet. Beispielsweise ist die Recheneinheit dazu eingerichtet, eine CO2-Information für die als Gasheizeinheit ausgebildete weitere Heizeinheit zu beziehen von zumindest einem Energieversorger, welcher ein Gas für den Betrieb der weiteren Heizeinheit liefert. Beispielsweise ist die Recheneinheit dazu eingerichtet, die CO2-Information für die weitere Heizeinheit zu verarbeiten. Beispielsweise kann die CO2-Information für die weitere Heizeinheit eine CO2-Kenngröße beinhalten, welche angibt, wieviel CO2 entsteht, wenn eine genormte Gasmenge, insbesondere ein genormtes Gasvolumen, insbesondere von der weiteren Heizeinheit, bei einem Erzeugen einer definierten Wärmeenergie verbrannt wird. Insbesondere kann die CO2-Kenngröße beinhalten, wieviel CO2 entsteht, wenn eine, insbesondere genormte, Gasmenge verbrannt wird, wieviel CO2 bei einem Transport der, insbesondere genormten, Gasmenge entstanden ist und/oder wieviel CO2 bei einem Abbau der, insbesondere genormten, Gasmenge entstanden ist.

Unter einer "Primärenergieinformation" soll vorzugsweise eine Information verstanden werden, welche zumindest eine, bevorzugt eine Vielzahl an, Primärenergiekenngrößen und/oder Primärenergieparameter, wie beispielsweise Primärenergiefaktoren zu definierten Energieträgern wie Kohle, Gas, Öl, Strom, Torf oder dgl., beinhaltet, welche es insbesondere ermöglichen zu berechnen, wieviel, insbesondere welche Menge, eines Energieträgers, insbesondere in einer Gewichts- und/oder Volumeneinheit, bei der Produktion einer Energiemenge, insbesondere definierten Energiemenge, bevorzugt Wärmeenergiemenge, verbraucht werden muss. Insbesondere beinhaltet die Primärenergieinformation zumindest eine Primärenergiekenngröße, bevorzugt einen Primärenergiefaktor, zu dem zumindest einen von den zumindest zwei Heizeinheiten umgewandelten Energieträger. Insbesondere gibt die Primärenergieinformation an, und/oder ermöglicht es zu berechnen, wieviel Primärenergie, insbesondere welche Menge an Primärenergie, bei einem Umwandeln, einem Transport und/oder einer Förderung, wie beispielsweise einem Abbau, einer Erschließung und/oder einer Entsorgung, insbesondere Endlagerung, eines Energieträgers in die definierte Energiemenge, insbesondere durch zumindest eine der Heizeinheiten, verbraucht wurde/wird. Insbesondere kann die Recheneinheit die Primärenergieinformation zu einem Ermitteln eines Primärenergieverbrauchs, insbesondere der Wärmeerzeugervorrichtung, zumindest eines, bevorzugt beider, insbesondere aller, der zumindest zwei Heizeinheiten, besonders bevorzugt für jede Heizeinheit individuell, insbesondere in Abhängigkeit des jeweiligen Energieträgers, welcher insbesondere von der jeweiligen Heizeinheit in eine Wärmeenergie umgewandelt wird, verarbeiten.

Die Primärenergie ist insbesondere zumindest eine Information über eine in einem Energieträger gespeicherte Energie, welche insbesondere bei einem optimalen Umwandlungswirkungsgrad von Eins, in beispielsweise Wärmeenergie umwandelbar ist. Insbesondere beinhalten erneuerbare Energieträger eine mathematisch näherungsweise unendliche Energiemenge. Insbesondere beinhalten die Primärenergiefaktoren jeweils zumindest Wirkungsgrade der zumindest zwei, bevorzugt aller, Heizeinheiten, insbesondere zumindest Umwandlungswirkungsgrade, welche einen Wirkungsgrad von Erschließung eines Energieträgers bis Endlagerung eines Energieträgers beschreiben. Insbesondere beschreiben die Primärenergiefaktoren jeweils einen Quotienten aus durch eine durch einen Energieträger erreichter Energiemenge zu einer ursprünglich vorhandenen Energiemenge in dem Energieträger.

Bevorzugt basiert der Umweltparameter auf der Primärenergie, insbesondere der Primärenergieinformation. Insbesondere ist ein Umweltparameter ein abstrahierter, vereinheitlichter Brennstoffparameter, auf welchen jeder Energieträger, insbesondere über einen Primärenergiefaktor, zurückgerechnet werden kann, insbesondere um die einzelnen Energieträger, bevorzugt die Heizeinheiten der Wärmevorrichtung, miteinander zu vergleichen. Insbesondere beinhaltet der Umweltparameter zumindest eine Information darüber, welche Menge eines Energieträgers verbraucht werden muss, um eine definierte, festgelegte Energie, insbesondere die Primärenergie des jeweiligen Energieträgers, bevorzugt als Wärmeenergie, zu erzeugen. Der Umweltparameter ist beispielsweise ein Primärenergieverbrauch. Der Umweltparameter kann insbesondere ein auf einen CO2-Ausstoß normierter Primärenergieverbrauch sein, welcher sich insbesondere auf einen Teil einer Energieproduktionslinie bezieht. Insbesondere ist die Recheneinheit dazu eingerichtet, den Umweltparameter zu reduzieren, insbesondere zu minimieren, bevorzugt in einem Betriebszustand der Wärmeerzeugervorrichtung. Insbesondere ist die Recheneinheit dazu eingerichtet, den Primärenergieverbrauch der Wärmeerzeugervorrichtung, insbesondere der durch die Wärmeerzeugervorrichtung verbrauchten Energieträger, zu reduzieren, bevorzugt zu minimieren. Insbesondere ist die Recheneinheit dazu eingerichtet, den CO2-Ausstoß der Wärmeerzeugervorrichtung, insbesondere der durch die Wärmeerzeugervorrichtung verbrauchten Energieträger, zu reduzieren, bevorzugt zu minimieren.

Beispielsweise ist die zumindest eine Heizeinheit als eine Wärmepumpeneinheit ausgebildet. Beispielsweise ist die Recheneinheit dazu eingerichtet, eine Primärenergieinformation für die als Wärmepumpeneinheit ausgebildete Heizeinheit zu beziehen von zumindest einem Energieversorger, welcher einen elektrischen Strom für den Betrieb der Heizeinheit liefert. Beispielsweise ist die Recheneinheit dazu eingerichtet, die Primärenergieinformation für die Heizeinheit zu verarbeiten. Beispielsweise kann die Primärenergieinformation für die Heizeinheit eine Primärenergiekenngröße beinhalten, welche angibt, wieviel Primärenergie, insbesondere in einer Energieeinheit wie Joule oder Kilowattstunde, in den Energieträgern enthalten war, welche umgewandelt wurden um eine, insbesondere genormte, Strommenge, insbesondere in Kilowattstunden oder dgl., zu produzieren. Insbesondere kann die Primärenergieinformation für die Heizeinheit beinhalten, aus welchen Energieträgern, insbesondere in Prozent, die, insbesondere genormte, Strommenge produziert wurde. Insbesondere kann die Primärenergieinformation für die Heizeinheit beinhalten, wieviel Primärenergie bei einer Produktion der, insbesondere genormten, Strommenge verloren gegangen ist und/oder umgewandelt worden ist. Insbesondere kann die Primärenergiekenngröße beinhalten, wieviel Primärenergie verloren gegangen ist, um die Energieträger in die, insbesondere genormte, Strommenge umzuwandeln, und insbesondere wieviel Primärenergie verloren gegangen ist, um die Strommenge in eine, insbesondere definierte, Wärmeenergie umzuwandeln, und insbesondere wieviel Primärenergie bei einem Transport der Energieträger vor einer Umwandlung in die, insbesondere genormte, Strommenge verbraucht worden ist und/oder wieviel Primärenergie bei einem Abbau der Energieträger vor einer Umwandlung in die, insbesondere genormte, Strommenge verbraucht worden ist.

Beispielsweise ist die weitere Heizeinheit als eine Gasheizeinheit ausgebildet. Beispielsweise ist die Recheneinheit dazu eingerichtet, eine Primärenergieinformation für die als Gasheizeinheit ausgebildete weitere Heizeinheit zu beziehen von zumindest einem Energieversorger, welcher ein Gas für den Betrieb der weiteren Heizeinheit liefert. Beispielsweise ist die Recheneinheit dazu eingerichtet, die Primärenergieinformation für die weitere Heizeinheit zu verarbeiten. Beispielsweise kann die Primärenergieinformation für die weitere Heizeinheit eine Primärenergiekenngröße beinhalten, welche angibt, wieviel Primärenergie verbraucht wird, wenn eine genormte Gasmenge, insbesondere ein genormtes Gasvolumen, insbesondere von der weiteren Heizeinheit, verbrannt wird zu einem Erzeugen einer, insbesondere der definierten, Wärmeenergie. Insbesondere kann die Primärenergiekenngröße beinhalten, wieviel Primärenergie verloren ging, wenn eine, insbesondere genormte, Gasmenge verbrannt wird, wieviel Primärenergie bei einem Transport der, insbesondere genormten, Gasmenge verloren ging und/oder wieviel Primärenergie bei einem Abbau der, insbesondere genormten, Gasmenge verloren ging.

Die Wärmeerzeugervorrichtung kann alternativ zumindest eine Heizeinheit und zumindest eine dazu gehörige Energiespeichereinheit aufweisen. Vorzugsweise ist die Heizeinheit in diesem Fall dazu eingerichtet, Strom, insbesondere von der Energiespeichereinheit zu beziehen und, in Wärmeenergie umzuwandeln. Die Recheneinheit ist in diesem Fall dazu eingerichtet, Strom in Abhängigkeit der zumindest einen CO2-Information und/oder der zumindest einen Primärenergieinformation von zumindest einem Energieversorger, insbesondere Stromversorger, zu beziehen, bevorzugt und zu verarbeiten, insbesondere zu einem Reduzieren eines CO2-Ausstoßes und/oder zu einem Verbessern eines Umweltparameters. Insbesondere ist die Recheneinheit ist in diesem Fall dazu eingerichtet, Strom zu einem Aufladen der Energiespeichereinheit von einem Energieversorger zu beziehen, wobei der bezogene Strom unter einem in der Recheneinheit hinterlegten, insbesondere einstellbaren, CO2-Grenzwert pro kWh produziert wurde. Beispielsweise ist die Recheneinheit in diesem Fall dazu eingerichtet, die Energiespeichereinheit mit Strom aus zumindest zu 25 %, bevorzugt zumindest zu 30 %, besonders bevorzugt zumindest zu 50 % und ganz besonders bevorzugt zumindest zu 75 %, erneuerbarer Energie und/oder Kernenergie aufzuladen, insbesondere zu einem Reduzieren des CO2-Ausstoßes der Wärmeerzeugervorrichtung. Insbesondere kann die Recheneinheit als eine ans Internet angeschlossene Smart-Recheneinheit ausgebildet sein, welche dazu eingerichtet ist, Opportunitätskosten anderer Wärmeerzeugervorrichtungen, welche durch die Umwandlung von Energieträgern an der Wärmeerzeugervorrichtung entstehen würden, zu dem Reduzieren des CO2-Ausstoßes und/oder zu dem Verbessern des Umweltparameters zu beziehen und/oder zu verarbeiten.

Durch die erfindungsgemäße Ausgestaltung der Wärmeerzeugervorrichtung kann der Ausstoß von CO2 vorteilhaft reduziert werden. Insbesondere kann die Wärmeerzeugervorrichtung bei einem Decken eines Wärmebedarfs durch die Wärmeerzeugervorrichtung den CO2-Ausstoß vorteilhaft gering halten. Insbesondere kann eine vorteilhaft umweltfreundliche Wärmeerzeugervorrichtung erreicht werden. Insbesondere kann die Wärmeerzeugervorrichtung bei einem Decken eines Wärmebedarfs durch die Wärmeerzeugervorrichtung den Umweltparameter vorteilhaft verbessern, insbesondere einen Primärenergieverbrauch vorteilhaft reduzieren, insbesondere minimieren.

Des Weiteren wird vorgeschlagen, dass die Recheneinheit dazu eingerichtet ist, die CO2-Information und/oder die Primärenergieinformation von dem zumindest einen Energieversorger in periodischen Abständen zu beziehen und/oder zu verarbeiten. Die Recheneinheit ist insbesondere dazu eingerichtet, die CO2-Information und/oder die Primärenergieinformation von dem zumindest einen Energieversorger in periodischen Abständen zu beziehen und abzuspeichern. Vorzugsweise ist die Recheneinheit dazu eingerichtet, die CO2-Information und/oder die Primärenergieinformation von dem zumindest einen Energieversorger in periodischen zeitlichen Abständen von insbesondere 5 min, insbesondere 10 min, bevorzugt 15 min, insbesondere 60 min, zu beziehen und/oder zu verarbeiten. Die Recheneinheit kann dazu eingerichtet sein, die CO2-Information und/oder die Primärenergieinformation von dem zumindest einem Energieversorger zumindest einmal, bevorzugt zumindest zweimal, besonderes bevorzugt zumindest dreimal und ganz besonders bevorzugt zumindest viermal, pro Stunde, insbesondere pro Tag, zu beziehen und/oder zu verarbeiten. Darunter, dass die Recheneinheit dazu eingerichtet ist, soll vorzugsweise verstanden werden, dass die Recheneinheit dazu eingerichtet ist, die CO2-Information und/oder die Primärenergieinformation in periodischen Abständen zumindest abzufragen, wobei die CO2-Information und/oder die Primärenergieinformation insbesondere in aperiodischen, insbesondere unregelmäßigen, insbesondere zeitlichen, Abständen bezogen, gespeichert und/oder verarbeitet werden kann. Alternativ kann die Recheneinheit dazu eingerichtet sein, die CO2-Information und/oder die Primärenergieinformation von dem zumindest einen Energieversorger in aperiodischen, beispielsweise zu jeder Inbetriebnahme der Wärmevorrichtung, Abständen zu beziehen und/oder zu verarbeiten. Es kann eine vorteilhafte Überwachung des CO2-Ausstoßes und/oder des Umweltparameters erreicht werden.

Ferner wird vorgeschlagen, dass die Recheneinheit dazu eingerichtet ist, CO2-Kenngrößen der CO2-Information und/oder Primärenergiekenngrößen der Primärenergieinformation miteinander zu vergleichen. Vorzugsweise ist eine CO2-Kenngröße ein CO2-Ausstoß einer der zumindest zwei Heizeinheiten bei einem Produzieren der definierten, bevorzugt, einstellbaren Wärmeenergie. Vorzugsweise werden die CO2-Kenngrößen der zumindest zwei Heizeinheiten miteinander verglichen zu einem Reduzieren, bevorzugt Minimieren, des CO2-Ausstoßes der Wärmeerzeugervorrichtung, insbesondere in einem Betriebszustand der Wärmeerzeugervorrichtung, bevorzugt in welchem die definierte Wärmemenge erzeugt wird.

Vorzugsweise ist eine Primärenergiekenngröße ein Primärenergieverbrauch einer der zumindest zwei Heizeinheiten bei einem Produzieren der definierten, bevorzugt, einstellbaren Wärmeenergie. Vorzugsweise werden die Primärenergiekenngrößen der zumindest zwei Heizeinheiten miteinander verglichen zu einem Reduzieren, bevorzugt Minimieren, des Primärenergieverbrauchs der Wärmeerzeugervorrichtung, insbesondere in einem Betriebszustand der Wärmeerzeugervorrichtung, bevorzugt in welchem die definierte Wärmemenge erzeugt wird. Insbesondere wird über eine Reduzierung, bevorzugt Minimierung, des Primärenergieverbrauchs indirekt der CO2-Ausstoß der Wärmeerzeugervorrichtung reduziert, bevorzugt minimiert. Es kann ein vorteilhaft schnell ermittelbarer Abgleich der Heizeinheiten erreicht werden, insbesondere zu einem vorteilhaft umweltfreundlichen Betrieb der Wärmeerzeugervorrichtung.

Des Weiteren wird vorgeschlagen, dass die Recheneinheit dazu eingerichtet ist, ein Betriebsverhältnis der zumindest einen Heizeinheit und der zumindest einen weiteren Heizeinheit in Abhängigkeit von der CO2-Information und/oder der Primärenergieinformation zu steuern oder zu regeln. Vorzugsweise ist die Recheneinheit dazu eingerichtet, das Betriebsverhältnis der zumindest einen Heizeinheit und der zumindest einen weiteren Heizeinheit in Abhängigkeit von der CO2-Information und/oder der Primärenergieinformation zu einem Reduzieren, bevorzugt Minimieren, des CO2-Ausstoßes der Wärmeerzeugervorrichtung zu steuern oder zu regeln. Vorzugsweise ist die Recheneinheit dazu eingerichtet, das Betriebsverhältnis der zumindest einen Heizeinheit und der zumindest einen weiteren Heizeinheit zu einem Decken des, bevorzugt einstellbaren, Bedarfs an Wärmeenergie zu steuern und/oder zu regeln. Insbesondere ist die Recheneinheit dazu eingerichtet, das Betriebsverhältnis zwischen 100 % Betrieb der Heizeinheit sowie 0 % Betrieb der weiteren Heizeinheit und 0 % Betrieb der Heizeinheit sowie 100 % Betrieb der weiteren Heizeinheit zu steuern und/oder zu regeln. Es kann eine vorteilhaft einfache Art und Weise einer CO2-Austoßreduktion und oder Umweltparameterverbesserung erreicht werden.

Ferner wird vorgeschlagen, dass die Recheneinheit dazu eingerichtet ist, das Betriebsverhältnis zumindest über einen definierten Betriebszeitraum zu steuern oder zu regeln. Vorzugsweise ist die Recheneinheit dazu eingerichtet, das Betriebsverhältnis der zumindest einen Heizeinheit und der zumindest einen weiteren Heizeinheit über einen Betriebszeitraum von zumindest 1 h, bevorzugt zumindest 4 h, besonders bevorzugt zumindest 24 h und ganz besonders bevorzugt zumindest 48 h, zu steuern und/oder zu regeln. Insbesondere kann die Recheneinheit dazu eingerichtet sein, das Betriebsverhältnis in einem Dauerbetriebszustand der Wärmeerzeugervorrichtung zu steuern und/oder zu regeln. Bevorzugt bezieht und/oder verarbeitet die Recheneinheit die zumindest eine CO2-Information und/oder die zumindest eine Primärenergieinformation zumindest einmal, bevorzugt mehrmals, wie beispielsweise periodisch alle 10 min, 15 min, 60 min oder dgl., während des definierten Betriebszeitraums. Es kann eine vorteilhaft genaue Betriebsüberwachung erreicht werden. Insbesondere kann erreicht werden, dass die Wärmeerzeugervorrichtung bei einem Decken eines Wärmeenergiebedarfs das Betriebsverhältnis vorteilhaft oft steuert und/oder regelt, insbesondere zu einem vorteilhaft einfachen Reduzieren des CO2-Austoßes und/oder einem vorteilhaft einfachen Verbessern des Umweltparameters.

Des Weiteren wird vorgeschlagen, dass die Recheneinheit dazu eingerichtet ist, das Betriebsverhältnis innerhalb zumindest eines Kostenlimits zu steuern oder zu regeln. Vorzugsweise ist die Recheneinheit dazu eingerichtet, das Betriebsverhältnis innerhalb zumindest eines einstellbaren Kostenlimits zu steuern oder zu regeln. Insbesondere kann die Recheneinheit dazu eingerichtet sein, das Betriebsverhältnis innerhalb zumindest eines Kostenlimits zu steuern oder zu regeln, bevorzugt zu einem Reduzieren des CO2-Ausstoßes und/oder zu einem Verbessern des Umweltparameters. Vorzugsweise ist die Recheneinheit dazu eingerichtet, das Betriebsverhältnis innerhalb eines, bevorzugt einstellbaren Betriebszeitraums, zumindest eines für diesen Betriebszeitraum geltenden, bevorzugt einstellbaren, Kostenlimits zu steuern oder zu regeln. Bevorzugt ist die Recheneinheit dazu eingerichtet, das Betriebsverhältnis der Heizeinheiten derart zu steuern und/oder zu regeln, dass innerhalb des Kostenlimits der CO2-Ausstoß der Wärmeerzeugervorrichtung reduziert, insbesondere minimiert, wird und/oder der Umweltparameter verbessert wird, insbesondere der Primärenergieverbrauch minimiert wird, wobei insbesondere der, bevorzugt einstellbare, Bedarf an Wärmeenergie gedeckt wird. Es kann vorteilhaft erreicht werden, dass ein Risiko eines unverhältnismäßig teuren Reduzierens des CO2-Ausstoßes und/oder Verbessern des Umweltparameters vorteilhaft gering gehalten werden kann.

Ferner wird vorgeschlagen, dass die Recheneinheit dazu eingerichtet ist, Flusstemperaturen an der zumindest einen Heizeinheit und/oder an der zumindest einen weiteren Heizeinheit in Abhängigkeit von der CO2-Information und/oder der Primärenergieinformation zu steuern und/oder zu regeln. Insbesondere können die zumindest eine Heizeinheit und die zumindest eine weitere Heizeinheit in zwei voneinander getrennten Wärmekreisläufen angeordnet sein, welche dazu vorgesehen sind, denselben Bereich, bevorzugt dieselbe Räumlichkeit, beispielsweise dasselbe Haus, denselben Raum o dgl., zu beheizen. Insbesondere können die zumindest eine Heizeinheit und die zumindest eine weitere Heizeinheit dazu eingerichtet sein, unterschiedliche, bevorzugt räumlich getrennte, Heizfluide zu erhitzen. Insbesondere können die zumindest eine Heizeinheit und die zumindest eine weitere Heizeinheit dazu eingerichtet sein, Flusstemperaturen der zumindest zwei verschiedenen Heizfluide in dem jeweiligen Wärmekreislauf zu steuern und/oder zu regeln. Insbesondere können die zumindest eine Heizeinheit und die zumindest eine weitere Heizeinheit dazu eingerichtet sein, Flusstemperaturen und Flussgeschwindigkeiten der zumindest zwei verschiedenen Heizfluide in dem jeweiligen Wärmekreislauf zu steuern und/oder zu regeln, insbesondere über Ventilelemente oder dergleichen. Insbesondere sind Flusstemperaturen abschnittsweise Temperaturen eines Heizfluids in einem Wärmekreislauf in einem Bereich eines der Heizelemente. Die zumindest zwei Wärmekreisläufe können über, insbesondere durchflusssperrbare, fluidische Verbindungen, insbesondere mit Ventilelementen, miteinander verbunden sein.

Bevorzugt sind die zumindest eine Heizeinheit und die zumindest eine weitere Heizeinheit in einem, insbesondere gemeinsamen, Wärmekreislauf angeordnet, insbesondere zu einem Erhitzen eines gleichen, bevorzugt selben, Heizfluids. Insbesondere kann die zumindest eine Heizeinheit und/oder die zumindest eine weitere Heizeinheit, beispielsweise über ein Ventilelement, aus dem gemeinsamen Wärmekreislauf fluidisch ausgesperrt werden. Bevorzugt sind die zumindest eine Heizeinheit und die zumindest eine weitere Heizeinheit seriell in einem, insbesondere gemeinsamen, Wärmekreislauf angeordnet. Alternativ können die zumindest eine Heizeinheit und die zumindest eine weitere Heizeinheit parallel in einem, insbesondere gemeinsamen, Wärmekreislauf angeordnet sein. Insbesondere ist die zumindest eine Heizeinheit dazu eingerichtet, das Heizfluid auf eine, insbesondere weitere, definierte Flusstemperatur zu erhitzen. Insbesondere ist die zumindest eine weitere Heizeinheit dazu eingerichtet, das Heizfluid auf eine, insbesondere weitere, definierte Flusstemperatur zu erhitzen. Es kann eine vorteilhafte Wärmeerzeugervorrichtungsgeometrie erreicht werden, welche es der Recheneinheit ermöglicht, eine vorteilhaft einfache Steuerung des Betriebsverhältnisses vorzunehmen. Insbesondere kann erreicht werden, dass das Betriebsverhältnis vorteilhaft direkt auf Flusstemperaturen des Heizfluids umlenkbar ist. Insbesondere kann eine vorteilhaft gesicherte Deckung des Wärmebedarfs erreicht werden.

Darüber hinaus wird ein Wärmeerzeugersystem mit einer erfindungsgemäßen Wärmeerzeugervorrichtung vorgeschlagen. Das Wärmeerzeugersystem kann mehrere, insbesondere räumlich beabstandete, Wärmeerzeugervorrichtungen umfassen. Vorzugsweise umfasst das Wärmepumpensystem eine Zentralrecheneinheit, welche dazu vorgesehen ist, die zumindest eine, bevorzugt eine Vielzahl an, Recheneinheit, bevorzugt Recheneinheiten, zu steuern und/oder zu regeln, insbesondere zu koordinieren, bevorzugt zu einem Reduzieren eines CO2-Ausstoßes des Wärmeerzeugersystems, insbesondere jeder Wärmeerzeugervorrichtung des Wärmepumpensystems. Die Zentralrecheneinheit kann zumindest teilweise als Recheneinheit zumindest einer der Wärmeerzeugervorrichtungen ausgebildet sein. Es kann eine vorteilhaft umweltfreundliche Produktion von Wärmeenergie verschiedener Wärmeerzeugervorrichtungen erreicht werden, wobei insbesondere ein vorteilhaft geringer Gesamt-CO2-Verbrauch und/oder Primärenergieverbrauch des Wärmeerzeugersystems erreicht werden kann.

Darüber hinaus wird ein Verfahren zum Betrieb einer erfindungsgemäßen Wärmeerzeugervorrichtung vorgeschlagen. Vorzugsweise wird in zumindest einem Verfahrensschritt die CO2-Information und/oder die Primärenergieinformation bezogen. Vorzugsweise wird in zumindest einem Verfahrensschritt die CO2-Information und/oder die Primärenergieinformation verarbeitet, bevorzugt zu einem Steuern und/oder Regeln eines Betriebs der Wärmeerzeugervorrichtung.

Vorzugsweise wird in zumindest einem Verfahrensschritt der CO2-Ausstoß und/oder der Primärenergieverbrauch der Wärmeerzeugervorrichtung reduziert, insbesondere minimiert. Es kann ein vorteilhaft umweltfreundlicher, insbesondere treibhausgasreduzierter, Betrieb der Wärmeerzeugervorrichtung erreicht werden.

Die erfindungsgemäße Wärmeerzeugervorrichtung, das erfindungsgemäße Wärmeerzeugersystem und/oder das erfindungsgemäße Verfahren sollen/soll hierbei nicht auf die oben beschriebene Anwendung und Ausführungsform beschränkt sein. Insbesondere können/kann die erfindungsgemäße Wärmeerzeugervorrichtung, das erfindungsgemäße Wärmeerzeugersystem und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Wärmeerzeugersystem mit zwei erfindungsgemäßen Wärmeerzeugervorrichtungen in einer schematischen Darstellung,
- Fig. 2: eine der erfindungsgemäßen Wärmeerzeugervorrichtungen in einer schematischen Darstellung,
- Fig. 3: ein erfindungsgemäßes Verfahren in einer schematischen Darstellung,
- Fig. 4: ein Strommix-Diagramm einer CO2-Information und/oder einer Primärenergieinformation in einer schematischen Darstellung,
- Fig. 5: eine alternative erfindungsgemäße Wärmeerzeugervorrichtung in einer schematischen Darstellung und
- Fig. 6: eine weitere alternative erfindungsgemäße Wärmeerzeugervorrichtung in einer schematischen Darstellung.

### Beschreibung der Ausführungsbeispiele

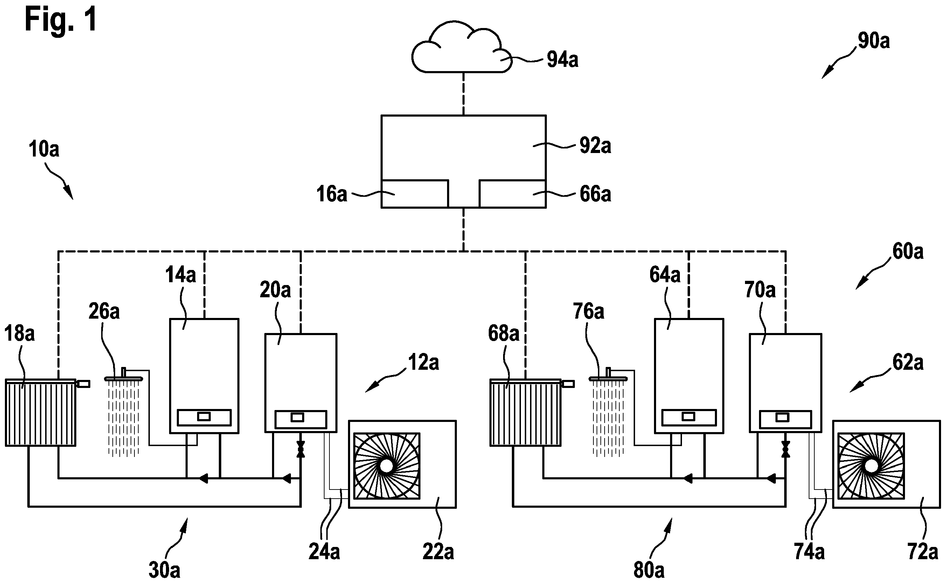

Figur 1 zeigt ein Wärmeerzeugersystem 90a mit einer Wärmeerzeugervorrichtung 10a und mit einer weiteren Wärmeerzeugervorrichtung 60a.

Die Wärmeerzeugervorrichtungen 10a, 60a umfassen jeweils zumindest eine Heizeinheit 12a, 62a. Die Heizeinheiten 12a, 62a sind jeweils als Wärmepumpeneinheiten ausgebildet. Die Heizeinheiten 12a, 62a umfassen jeweils eine Indooreinheit 20a, 70a und jeweils eine Outdooreinheit 22a, 72a, welche jeweils über fluidische und/oder elektrische Leitungen 24a, 74a verbunden sind.

Die Wärmeerzeugervorrichtung 10a, 60a umfasst zumindest eine weitere Heizeinheit 14a, 64a. Die weiteren Heizeinheiten 14a, 64a sind jeweils als Gasheizeinheiten ausgebildet.

Die Wärmeerzeugervorrichtungen 10a, 60a weisen jeweils einen voneinander fluidisch getrennten Wärmekreislauf 30a, 80a auf. In den Wärmekreisläufen 30a, 80a fließt jeweils ein Heizfluid, welches insbesondere von den Heizeinheiten 12a, 62a und/oder den weiteren Heizeinheiten 14a, 64a erhitzt werden kann. Die Wärmeerzeugervorrichtungen 10a, 60a weisen jeweils einen Heizkörper 18a, 68a auf, welcher an den jeweiligen Wärmekreislauf 30a, 80a fluidisch angeschlossen ist. Die jeweiligen Heizfluide in den jeweiligen Wärmekreisläufen 30a, 80a sind dazu eingerichtet, die jeweiligen Heizkörper 18a, 68a zu erwärmen. Die Wärmeerzeugervorrichtungen 10a, 60a weisen jeweils eine Duscheinheit 26a, 76a auf, welche über die jeweilige weitere Heizeinheit 14a, 64a an den jeweiligen Wärmekreislauf 30a, 80a fluidisch angeschlossen ist. Die weiteren Heizeinheiten 14a, 64a sind jeweils zu einer Wasserausgabe an den Duscheinheiten 26a, 76a fluidisch mit den Duscheinheiten 26a, 76a verbunden.

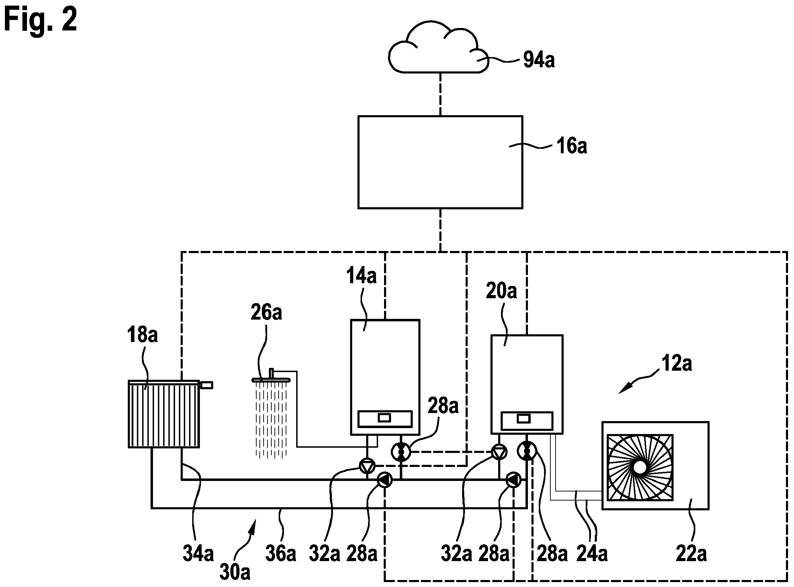

Die Heizeinheiten 12a, 62a sind über die Wärmekreisläufe 30a, 80a mit den weiteren Heizeinheiten 14a, 64a fluidisch verbunden. Insbesondere sind die Heizeinheiten 12a, 62a und die weiteren Heizeinheiten 14a, 64a über den Wärmekreislauf 30a, 80a fluidisch verbunden, insbesondere zu einem Aufheizen des Heizfluids in dem Wärmekreislauf 30a, 80a. In die Wärmekreisläufe 30a, 80a sind jeweils Ventilelemente 28a und/oder Pumpenelemente 32a integriert (vgl. Figur 2), insbesondere zu einer Heizfluidförderung von einer Heizeinheit 12a, 62a und/oder der weiteren Heizeinheit 14a, 64a zu der weiteren Heizeinheit 14a, 64a und/oder zu dem Heizkörper 18a, 68a und über eine andere Fluidleitung des Wärmekreislaufs 30a, 80a zurück zu der Heizeinheit 12a, 62a und/oder der weiteren Heizeinheit 14a, 64a.

Die Wärmeerzeugervorrichtungen 10a, 60a umfassen jeweils eine Recheneinheit 16a, 66a. Die Recheneinheiten 16a, 66a sind mit einem Internet 94a verbunden, welches insbesondere durch ein Wolkensymbol dargestellt ist.

Das Wärmeerzeugersystem 90a umfasst eine Zentralrecheneinheit 92a. Die Zentralrecheneinheit 92a ist mit dem Internet 94a verbunden. Die Recheneinheiten 16a, 66a der Wärmeerzeugervorrichtungen 10a, 60a sind in die Zentralrecheneinheit 92a eingegliedert. Recheneinheiten 16a, 66a der Wärmeerzeugervorrichtungen 10a, 60a können separat voneinander und/oder von der Zentralrecheneinheit 92a ausgebildet und/oder angeordnet sein. Jedes Element der Wärmeerzeugervorrichtung 10a, insbesondere des Wärmeerzeugersystems 90a, kann mit einem Stromnetz, insbesondere über eine Energiespeichereinheit, verbunden sein. Die Wärmeerzeugervorrichtung 10a, insbesondere das Wärmeerzeugersystem 90a, kann die Energiespeichereinheit aufweisen.

Figur 2 zeigt die Wärmeerzeugervorrichtung 10a, insbesondere unverbunden mit einem Wärmeerzeugersystem. Insbesondere zeigt Figur 2 den Wärmekreislauf 30a der Wärmeerzeugervorrichtung 10a. In den Wärmekreislauf 30a sind mehrere Ventilelemente 28a integriert. In den Wärmekreislauf 30a sind mehrere Pumpenelemente 32a integriert. Die Ventilelemente 28a und/oder die Pumpenelemente 32a sind mit der Recheneinheit 16a verbunden. Insbesondere ist die Recheneinheit 16a dazu eingerichtet, die Ventilelemente 28a und/oder die Pumpenelemente 32a zu steuern und/oder zu regeln. Insbesondere kann die Heizeinheit 12a und/oder die weitere Heizeinheit 14a durch die Ventilelemente 28a von dem Wärmekreislauf 30a fluidisch abgetrennt, insbesondere gebypasst, werden. Insbesondere können die Pumpenelemente 32a das Heizfluid durch den Wärmekreislauf 30a, insbesondere zu dem Heizkörper 18a, fördern.

Der Wärmekreislauf 30a umfasst eine Heizleitung 34a, welche erhitztes Heizfluid von den Heizeinheiten 12a, 14a zu dem Heizkörper 18a leitet. Der Wärmekreislauf 30a umfasst eine Rückleitung 36a, welche erkaltetes Heizfluid von dem Heizkörper 18a zu den Heizeinheiten 12a, 14a leitet.

Die Recheneinheit 16a ist als freie Recheneinheit 16a ausgebildet, welche dazu vorgesehen ist, ausschließlich Teile der Wärmeerzeugervorrichtung 10a zu steuern und/oder zu regeln. Die Recheneinheit 16a ist mit dem Internet 94a verbunden.

Die Recheneinheit 16a ist dazu eingerichtet, zumindest eine CO2-Information und/oder zumindest eine Primärenergieinformation von zumindest einem Energieversorger, insbesondere aus von dem Energieversorger bereitgestellten Börsendaten zu einem Strommix, insbesondere über das Internet 94a, zu beziehen, insbesondere zu einem Reduzieren eines CO2-Ausstoßes und/oder zu einem Verbessern eines Umweltparameters. Die Recheneinheit 16a ist dazu eingerichtet, die CO2-Information und/oder die Primärenergieinformation von dem zumindest einem Energieversorger in periodischen Abständen, von insbesondere 10 min, 15 min oder 60 min, zu beziehen.

Die Recheneinheit 16a ist dazu eingerichtet, die CO2-Information und/oder die Primärenergieinformation, insbesondere von einem Energieversorger, zu verarbeiten zu einem Reduzieren des CO2-Ausstoßes und/oder zu einem Verbessern des Umweltparameters. Die Recheneinheit 16a ist dazu eingerichtet, die CO2-Information und/oder die Primärenergieinformation von dem zumindest einen Energieversorger in periodischen Abständen, von insbesondere 10 min, 15 min oder 60 min, zu verarbeiten. Die Recheneinheit 16a ist dazu eingerichtet, jede CO2-Information und/oder jede Primärenergieinformation von dem zumindest einen Energieversorger zu verarbeiten, insbesondere zumindest abzuspeichern.

Die Recheneinheit 16a ist dazu eingerichtet, ein Betriebsverhältnis der zumindest einen Heizeinheit 12a und der zumindest einen weiteren Heizeinheit 14a in Abhängigkeit von der CO2-Information und/oder der Primärenergieinformation zu steuern oder zu regeln. Die Recheneinheit 16a ist dazu eingerichtet, das Betriebsverhältnis zumindest über einen definierten Betriebszeitraum zu steuern oder zu regeln. Die Recheneinheit 16a ist dazu eingerichtet, das Betriebsverhältnis innerhalb zumindest eines Kostenlimits zu steuern oder zu regeln.

Die Recheneinheit 16a ist dazu eingerichtet, aus der CO2-Information zu errechnen, welche Menge an CO2 durch einen Betrieb der strombetriebenen Heizeinheit 12a entstehen wird/würde und entstanden ist. Die Recheneinheit 16a ist dazu eingerichtet, aus der CO2-Information zu errechnen, welche Menge an CO2 bei der Produktion des Stroms entstanden ist. Die Recheneinheit 16a ist dazu eingerichtet, aus der CO2-Information zu errechnen, welche Menge an CO2 bei dem Betrieb der Heizeinheit 12a, insbesondere durch ein Umwandeln von Strom in Wärmeenergie, entstehen würde/wird.

Die Recheneinheit 16a ist dazu eingerichtet, aus der CO2-Information zu errechnen, welche Menge an CO2 durch einen Betrieb der gasbetriebenen Heizeinheit 14a entstehen wird/würde und entstanden ist. Die Recheneinheit 16a ist dazu eingerichtet, aus der CO2-Information zu errechnen, welche Menge an CO2 bei der Produktion des Stroms entstanden ist. Die Recheneinheit 16a ist dazu eingerichtet, aus der CO2-Information zu errechnen, welche Menge an CO2 bei dem Betrieb der weiteren Heizeinheit 14a, insbesondere durch ein Umwandeln von Gas, insbesondere Brenngas, in Wärmeenergie, entstehen würde/wird.

Die Recheneinheit 16a ist dazu eingerichtet, aus der CO2-Information zu errechnen, welches Betriebsverhältnis der zumindest einen Heizeinheit 12a und der zumindest einen weiteren Heizeinheit 14a einen CO2-Ausstoß verursacht, welcher zumindest unter einem einstellbaren Grenzwert, bevorzugt minimal, bei einer Deckung eines Bedarfs an Wärmeenergie ist, insbesondere innerhalb eines monetären Kostenlimits, insbesondere für einen Betreiber der Wärmerzeugervorrichtung.

Die Recheneinheit 16a ist dazu eingerichtet, Flusstemperaturen an der zumindest einen Heizeinheit 12a und/oder an der zumindest einen weiteren Heizeinheit 14a in Abhängigkeit von der CO2-Information und/oder der Primärenergieinformation zu steuern und/oder zu regeln. Die Recheneinheit 16a ist dazu eingerichtet, das Betriebsverhältnis zu nutzen, um die Flusstemperaturen des Heizfluids in dem Wärmekreislauf 30a an der Heizeinheit 12a und der weiteren Heizeinheit 14a zu steuern und/oder zu regeln. Insbesondere sind die Heizeinheit 12a und die weitere Heizeinheit 14a in Reihe geschaltet zu einem inkrementellen Erhitzen des Heizfluids in dem Wärmekreislauf 30a, insbesondere zu einem Decken des Bedarfs an Wärmeenergie, insbesondere über den Heizkörper 18a.

Insbesondere kann die Recheneinheit 16a dazu eingerichtet sein, eine der Heizeinheiten 12a, 14a nicht zu betreiben. In diesem Fall steuert und/oder regelt die Recheneinheit 16a die Ventilelemente 28a und/oder Pumpenelemente 32a zu einem Bypassen des Heizfluids um die nicht betriebene Heizeinheit 12a, 14a.

Die Recheneinheit 16a kann dazu eingerichtet sein, elektrische Energie, insbesondere Strom, von der Energiespeichereinheit zu zumindest einer der Heizeinheiten 12a, 14a zu leiten.

Die Beschreibung der Recheneinheit 16a kann analog auf die Recheneinheit 66a der Wärmeerzeugervorrichtung 60a übertragen werden.

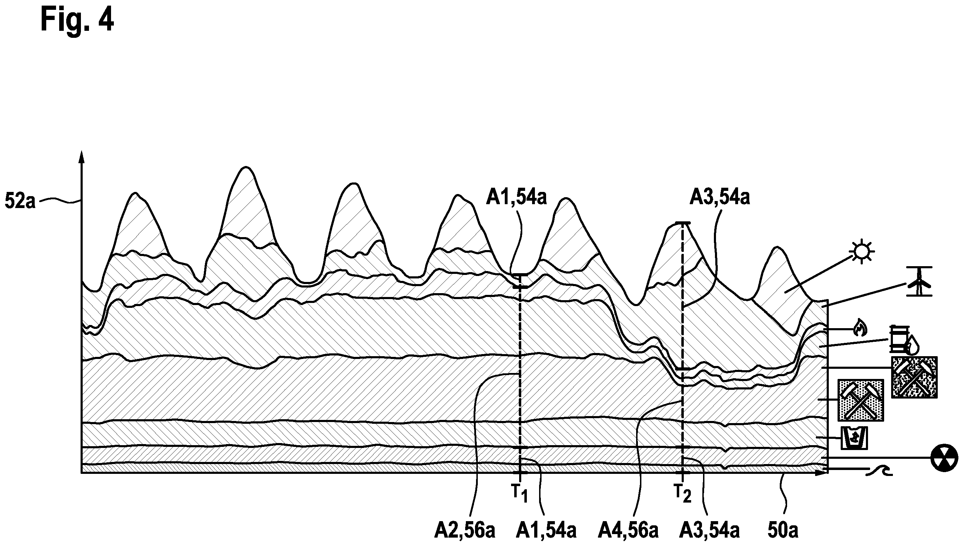

Beispielsweise kann das Verbrennen von Gas mehr CO2 verursachen als der Einsatz von Strom, wobei jede der Heizeinheiten 12a, 14a einzeln ausreichen würde, um den Bedarf an Wärmeenergie zu decken. In einem solchen, insbesondere stark vereinfachten Beispiel, in welchem Transport-CO2, etc. außen vorgelassen sind, kann die Recheneinheit 16a die Wärmeerzeugervorrichtung 10a zu einem Betrieb der Heizeinheit 12a und einem Nichtbetrieb der weiteren Heizeinheit 14a steuern und/oder regeln. In diesem Beispiel ist dies insbesondere am stärksten von einem aktuellen Strommix abhängig (vgl. Fig. 4).

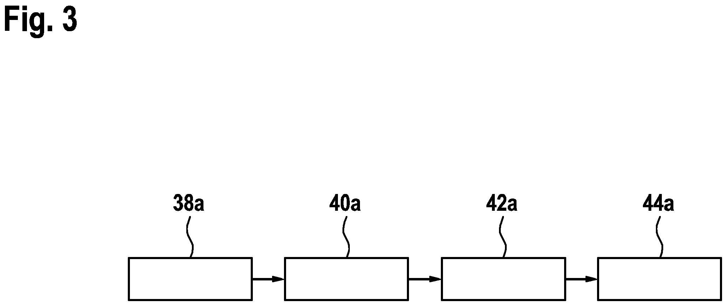

Figur 3 zeigt ein Verfahren zum Betrieb der Wärmeerzeugervorrichtung 10a.

In zumindest einem Verfahrensschritt, insbesondere einem Bezugsschritt 38a, bezieht die Recheneinheit 16a zumindest eine CO2-Information und/oder zumindest eine Primärenergieinformation von zumindest einem Energieversorger zu einem Reduzieren des CO2-Ausstoßes, insbesondere der Wärmeerzeugervorrichtung 10a, und/oder zu einem Verbessern des Umweltparameters.

In zumindest einem Verfahrensschritt, insbesondere einem Verarbeitungsschritt 40a, verarbeitet die Recheneinheit 16a die CO2-Information und/oder die Primärenergieinformation zu CO2-Kenngrößen, insbesondere zu potenziellen CO2-Ausstößen der Heizeinheiten 12a, 14a, und/oder zu Primärenergiekenngrößen, insbesondere zu potenziellen Primärenergieverbräuchen der Heizeinheiten 12a, 14a. In zumindest einem Verfahrensschritt, insbesondere dem Verarbeitungsschritt 40a, ermittelt die Recheneinheit 16a aus der CO2-Information und/oder der Primärenergieinformation CO2-Kenngrößen, insbesondere zu potenziellen CO2-Ausstößen der Heizeinheiten 12a, 14a, und/oder Primärenergiekenngrößen, insbesondere potenzielle Primärenergieverbräuche der Heizeinheiten 12a, 14a.

In zumindest einem Verfahrensschritt, insbesondere einem Vergleichsschritt 42a, vergleicht die Recheneinheit 16a CO2-Kenngrößen, insbesondere potenzielle CO2-Ausstöße der Heizeinheiten 12a, 14a, aus der CO2-Information und/oder Primärenergiekenngrößen, insbesondere potenzielle Primärenergieverbräuche der Heizeinheiten 12a, 14a, aus der Primärenergieinformation miteinander.

In zumindest einem Verfahrensschritt, insbesondere einem Kontrollschritt 44a, steuert und/oder regelt die Recheneinheit 16a das Betriebsverhältnis der zumindest einen Heizeinheit 12a und der zumindest einen weiteren Heizeinheit 14a in Abhängigkeit von der CO2-Information und/oder der Primärenergieinformation.

Figur 4 zeigt ein Strommix-Diagramm, welches insbesondere Teil der CO2-Information und/oder der Primärenergieinformation sein kann.

Die CO2-Information beinhaltet beispielsweise Informationen über eine Produktion von Strom, welche insbesondere teilweise als Strommix-Diagramm darstellbar sind (vgl. Fig. 4).

Das Strommix-Diagramm zeigt auf einer Abszisse 50a eine Zeitskala, insbesondere mehrere Tage. Das Strommix-Diagramm zeigt auf einer Ordinate 52a eine Leistung, insbesondere in GW. Das Strommix-Diagramm zeigt einen zeitlichen Verlauf der produzierten Stromleistung über mehrere Tage. Der produzierte Strom setzt sich zusammen aus einem Anteil aus Wasserkraft, insbesondere mit einem Wellensymbol gekennzeichnet, aus einem Anteil aus Biomasse, insbesondere mit einem Apfelsymbol gekennzeichnet, aus einem Anteil aus Kernkraft, insbesondere mit einem Kernkraftsymbol gekennzeichnet, aus einem Anteil aus Stein und Braunkohle, insbesondere mit einem hellen und einem dunklen Tagebausymbol gekennzeichnet, aus einem Anteil aus Öl, insbesondere mit einem Fasssymbol gekennzeichnet, aus einem Anteil aus Gas, insbesondere mit einem Flammensymbol gekennzeichnet, aus einem Anteil an Windkraft, insbesondere mit einem Windmühlensymbol gekennzeichnet, und aus einem Anteil aus Solarkraft, insbesondere mit einem Sonnensymbol gekennzeichnet. Tag und Nachtverläufe sind in dem Strommix-Diagramm an den kleineren und größeren Anteilen an Solarkraft leicht zu erkennen. Ebenfalls ist ein zeitweise größerer und kleiner Anteil an Windkraft zu erkennen.

Über die Zusammensetzung des produzierten käuflich erwerbbaren Stroms kann beispielsweise errechnet werden, wieviel CO2 bei der Umwandlung des jeweiligen Energieträgers zum aktuellsten Zeitpunkt entstanden ist.

Wasserkraft, Solarkraft, Kernkraft und/oder Windkraft verursachen erheblich geringere Mengen an CO2 als Kohle, Gas, Öl und/oder Biomasse bei der Umwandlung in Strom.

Beispielsweise ist zu einem Zeitpunkt T1 ein Anteil 54a A1 an Kohle, Öl, Biomasse und Gas größer als ein Anteil 54a A3 an Kohle, Öl, Biomasse und Gas zu einem Zeitpunkt T2, insbesondere am Strommix zu diesen Zeitpunkten T1, T2.

Beispielsweise ist zu einem Zeitpunkt T1 ein Anteil 56a A2 an Solarkraft, Windkraft, Wasserkraft und Kernkraft kleiner als ein Anteil 56a A4 an Solarkraft, Windkraft, Wasserkraft und Kernkraft zu einem Zeitpunkt T2, insbesondere am Strommix zu diesen Zeitpunkten T1, T2.

Insbesondere ist ein CO2-Ausstoß bei einer Produktion von Strom zum Zeitpunkt T1 größer als zum Zeitpunkt T2. Insbesondere ist ein CO2-Ausstoß bei einer Produktion von Wärmeenergie durch die Heizeinheit 12a aus Strom zum Zeitpunkt T1 größer als zum Zeitpunkt T2.

Insbesondere ist ein CO2-Ausstoß bei einer Produktion von Wärmeenergie durch die weitere Heizeinheit 14a aus Gas zum Zeitpunkt T1 gleich wie zum Zeitpunkt T2. Die Recheneinheit 16a ist dazu eingerichtet, das Betriebsverhältnis, insbesondere Flusstemperaturen und/oder Flussgeschwindigkeiten des Heizfluids, in Abhängigkeit der CO2-Information zu einem Reduzieren, bevorzugt Minimieren, des CO2-Ausstoßes der Wärmeerzeugervorrichtung 10a zu steuern und/oder zu regeln. Insbesondere kann die CO2-Information zusätzlich zu CO2-Kenngrößen der Stromproduktion für die Heizeinheit 12a oder der Gasverbrennung für die weitere Heizeinheit 14a CO2-Kenngrößen zu einem Transport von Energieträgern zu und/oder von den Umwandlungsorten, zu einer Endlagerung, zu einem Abbau, zu einer Erschließung oder dgl. beinhalten.

Insbesondere kann ein CO2-Ausstoß bei einer Produktion von Strom zum Zeitpunkt T1 größer sein als bei einer Verbrennung von Gas, insbesondere zu einem Decken des Bedarfs an Wärmeenergie. Insbesondere steuert und/oder regelt die Recheneinheit 16a zum Zeitpunkt T1 die Wärmeerzeugervorrichtung 10a zu einem alleinigen Betrieb der weiteren Heizeinheit 14a.

Insbesondere kann ein CO2-Ausstoß bei einer Produktion von Strom zum Zeitpunkt T2 kleiner sein als bei einer Verbrennung von Gas, insbesondere zu einem Decken des Bedarfs an Wärmeenergie. Insbesondere steuert und/oder regelt die Recheneinheit 16a zum Zeitpunkt T2 die Wärmeerzeugervorrichtung 10a zu einem alleinigen Betrieb der Heizeinheit 12a.

Analog kann die Recheneinheit 16a aus der Primärenergieinformation, welche beispielsweise die Zusammensetzung des produzierten käuflich erwerbbaren Stroms und aktuelle Primärenergiefaktoren beinhalten kann, ermitteln, welches Betriebsverhältnis den Bedarf an Wärmeenergie deckt und den Primärenergieverbrauch minimiert, insbesondere den Umweltparameter verbessert. Analog kann die Recheneinheit 16a die Wärmeerzeugervorrichtung 10a zu einem Verbessern des Umweltparameters, insbesondere zu einem Minimieren des Primärenergieverbrauchs, steuern und/oder regeln.

Die Recheneinheit 16a ist dazu eingerichtet, CO2-Kenngrößen der CO2-Information und/oder Primärenergiekenngrößen der Primärenergieinformation miteinander zu vergleichen. Primärenergiekenngrößen können beispielsweise, insbesondere potenzielle, Primärenergieverbräuche der zumindest zwei Heizeinheiten 12a, 14a sein. CO2-Kenngrößen können beispielsweise, insbesondere potenzielle, CO2-Ausstöße der zumindest zwei Heizeinheiten 12a, 14a sein.

Die Recheneinheit 16a kann dazu eingerichtet sein, Wirkungsgrade der Heizeinheiten 12a, 14a zu berechnen. Insbesondere kann die Recheneinheit 16c dazu eingerichtet sein, das Betriebsverhältnis, insbesondere Flusstemperaturen und/oder Flussgeschwindigkeiten des Heizfluids, zumindest teilweise in Abhängigkeit der Wirkungsgrade der Heizeinheiten 12a, 14a zu steuern und/oder zu regeln.

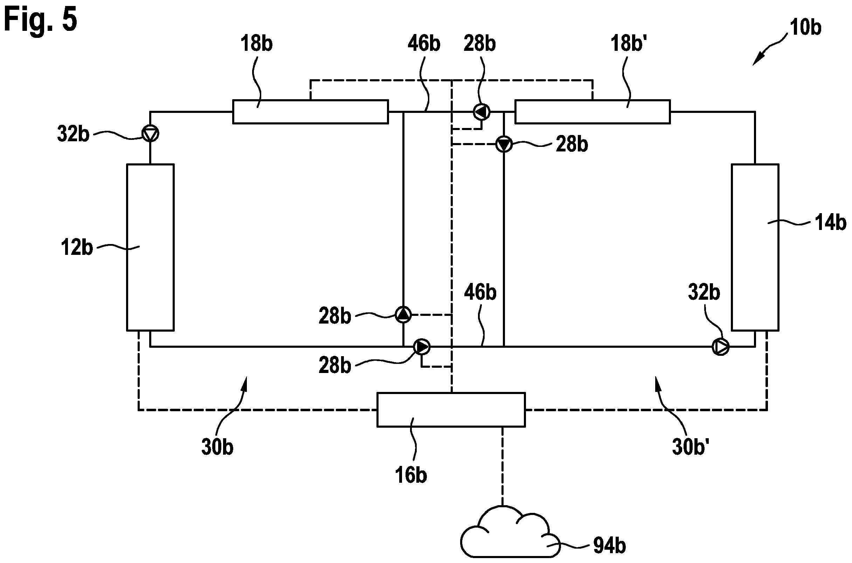

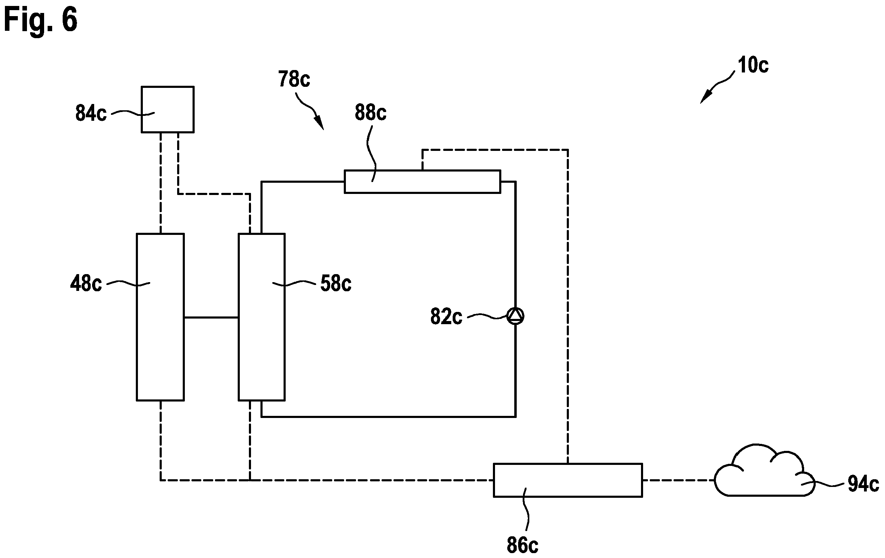

In den Figuren 5 und 6 ist jeweils ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 5 und 6 ist der Buchstabe a durch den Buchstaben b und c ersetzt.

Figur 5 zeigt eine alternative Wärmeerzeugervorrichtung 10b.

Jedes Element der Wärmeerzeugervorrichtung 10b, insbesondere eines Wärmeerzeugersystems, kann mit einem Stromnetz, insbesondere über eine Energiespeichereinheit, verbunden sein. Die Wärmeerzeugervorrichtung 10b, insbesondere des Wärmeerzeugersystems, kann eine Energiespeichereinheit aufweisen (nicht gezeigt).

Die Wärmeerzeugervorrichtung 10b weist insbesondere zwei Heizkörper 18b, 18b' auf. Die Wärmeerzeugervorrichtung 10b weist insbesondere zwei voneinander fluidisch trennbare Wärmekreisläufe 30b, 30b' auf. Die zwei fluidisch trennbaren Wärmekreisläufe 30b, 30b' sind zu einem Austausch von Heizfluid über Ventilelemente 28b und Leitungen 46b fluidisch verbindbar und/oder fluidisch trennbar.

Zwei Heizeinheiten 12b, 14b sind jeweils in einem der zwei Wärmekreisläufe 30b, 30b' angeordnet zu einem Erhitzen eines Heizfluids in jedem der zwei Wärmekreisläufe 30b, 30b'. Zwei Pumpenelemente 32b sind jeweils in einem der zwei Wärmekreisläufe 30b, 30b' angeordnet. Die Recheneinheit 16b ist zu einem Steuern und/oder Regeln der Heizeinheiten 12b, 14b, der Heizkörper 18b, 18b', der Ventilelemente 28b und/oder der Pumpenelemente 32b eingerichtet. Die Recheneinheit 16b ist mit einem Internet 94b verbunden.

Figur 6 zeigt eine weitere alternative Wärmeerzeugervorrichtung 10c.

Die Wärmeerzeugervorrichtung 10c umfasst eine Energiespeichereinheit 48c. Die Energiespeichereinheit 48c ist mit einem Stromnetz 84c verbunden. Die Energiespeichereinheit 48c mit einer Recheneinheit 86c der Wärmeerzeugervorrichtung 10c verbunden. Die Wärmeerzeugervorrichtung 10c umfasst ein Pumpenelement 82c, insbesondere zu einem Fördern des Heizfluids. Eine Heizeinheit 58c kann mit dem Stromnetz 84c verbunden sein, insbesondere zu einer Notfallversorgung mit Strom. Die Wärmeerzeugervorrichtung 10c umfasst einen Heizkörper 88c, welcher insbesondere an einen Wärmekreislauf 78c angeschlossen ist.

Die Wärmeerzeugervorrichtung 10c umfasst den Wärmekreislauf 78c. Eine Heizeinheit 58c ist in dem Wärmekreislauf 78c angeordnet, insbesondere zu einem Erhitzen eines Heizfluids in dem Wärmekreislauf 78c.

Die Recheneinheit 86c ist mit einem Internet 94c verbunden. Die Recheneinheit 86c ist dazu eingerichtet, die Energiespeichereinheit 48c mit elektrischem Strom von einem Energieversorger aufzuladen in Abhängigkeit einer CO2-Information und/oder einer Primärenergieinformation.

Die Recheneinheit 86c ist dazu eingerichtet, die Energiespeichereinheit 48c mit elektrischem Strom aufzuladen, wobei ein CO2-Ausstoß und/oder ein Primärenergieverbrauch bei der Produktion des Stroms unter einem einstellbaren Grenzwert liegt.

## Patentansprüche

1. Wärmeerzeugervorrichtung mit zumindest einer Heizeinheit (12a, 62a; 12b; 58c), insbesondere Wärmepumpeneinheit, mit zumindest einer Recheneinheit (16a, 66a; 16b; 86c) und mit zumindest einer weiteren Heizeinheit (14a, 64a; 14b) und/oder zumindest einer Energiespeichereinheit (48c), **dadurch gekennzeichnet, dass** die Recheneinheit (16a, 66a; 16b; 86c) dazu eingerichtet ist, zumindest eine CO2-Information und/oder zumindest eine Primärenergieinformation von zumindest einem Energieversorger zu beziehen und/oder zu verarbeiten zu einem Reduzieren eines CO2-Ausstoßes und/oder zu einem Verbessern eines Umweltparameters.

2. Wärmeerzeugervorrichtung nach Anspruch 1, **dadurch gekennzeichnet, dass** die Recheneinheit (16a, 66a; 16b; 86c) dazu eingerichtet ist, die CO2-Information und/oder die Primärenergieinformation von dem zumindest einen Energieversorger in periodischen Abständen zu beziehen und/oder zu verarbeiten.

3. Wärmeerzeugervorrichtung nach Anspruch 1 oder 2, **dadurch gekennzeichnet, dass** die Recheneinheit (16a, 66a; 16b; 86c) dazu eingerichtet ist, CO2-Kenngrößen der CO2-Information und/oder Primärenergiekenngrößen der Primärenergieinformation miteinander zu vergleichen.

4. Wärmeerzeugervorrichtung nach einem der vorhergehenden Ansprüche, **dadurch gekennzeichnet, dass** die Recheneinheit (16a, 66a; 16b; 86c) dazu eingerichtet ist, ein Betriebsverhältnis der zumindest einen Heizeinheit (12a, 62a; 12b; 58c) und der zumindest einen weiteren Heizeinheit (14a, 64a; 14b) in Abhängigkeit von der CO2-Information und/oder der Primärenergieinformation zu steuern oder zu regeln.

5. Wärmeerzeugervorrichtung nach Anspruch 4, **dadurch gekennzeichnet, dass** die Recheneinheit (16a, 66a; 16b; 86c) dazu eingerichtet ist, das Betriebsverhältnis zumindest über einen definierten Betriebszeitraum zu steuern oder zu regeln.

6. Wärmeerzeugervorrichtung zumindest nach Anspruch 4, **dadurch gekennzeichnet, dass** die Recheneinheit (16a, 66a; 16b; 86c) dazu eingerichtet ist, das Betriebsverhältnis innerhalb zumindest eines Kostenlimits zu steuern oder zu regeln.

7. Wärmeerzeugervorrichtung nach einem der vorhergehenden Ansprüche, **dadurch gekennzeichnet, dass** die Recheneinheit (16a, 66a; 16b; 86c) dazu eingerichtet ist, Flusstemperaturen an der zumindest einen Heizeinheit (12a, 62a; 12b; 58c) und/oder an der zumindest einen weiteren Heizeinheit (14a, 64a; 14b) in Abhängigkeit von der CO2-Information und/oder der Primärenergieinformation zu steuern und/oder zu regeln.

8. Wärmeerzeugersystem mit einer Wärmeerzeugervorrichtung (10a) nach einem der vorhergehenden Ansprüche und mit einer weiteren Wärmeerzeugervorrichtung (60a).

9. Verfahren zum Betrieb einer Wärmeerzeugervorrichtung (10a, 60a; 10b; 10c) nach einem der Ansprüche 1 bis 7.
